# EUROPÄISCHE PATENTSCHRIFT

(11) **EP 1 537 051 B1**
(45) Veröffentlichungstag und Bekanntmachung des Hinweises auf die Patenterteilung: **13.08.2008**
(21) Anmeldenummer: 03727264.8
(22) Anmeldetag: 13.03.2003
(51) Int. Cl.: C02F 1/44, B01D 61/00, C02F 1/00

(54) **KREISLAUFVERFAHREN UND ANLAGE ZUR AUFBEREITUNG VON BADEWASSER**
CIRCULATION METHOD AND SYSTEM FOR TREATING BATHING WATER
PROCEDE DE CIRCULATION ET INSTALLATION POUR TRAITER DE L'EAU DE BAIGNADE

(30) Priorität: 14.03.2002 DE 10211318
(43) Veröffentlichungstag der Anmeldung: 08.06.2005
(73) Patentinhaber: Krüger WABAG GmbH, 04442 Zwenkau (DE); Reis, Michael, 95326 Kulmbach (DE)
(72) Erfinder: HAGEN, Klaus, 95326 Kulmbach (DE); REIS, Michael, 95326 Kulmbach (DE)
(74) Vertreter: Melzer, Wolfgang
(86) Internationale Anmeldenummer: PCT/EP2003/002609
(87) Internationale Veröffentlichungsnummer: WO 2003/076346

(56) Entgegenhaltungen:
- EP-A- 0 634 362
- EP-A- 0 687 496
- WO-A-99/33752
- DE-A- 19 630 826
- DE-A- 19 810 388
- PATENT ABSTRACTS OF JAPAN vol. 1998, no. 10, 31. August 1998 (1998-08-31) & JP 10 121761 A (MITSUBISHI RAYON CO LTD;MITSUBISHI RAYON ENG CO LTD; DIA SPORTS KAIHAT), 12. Mai 1998 (1998-05-12)

## Beschreibung

Die gegenständliche Erfindung betrifft ein Kreislaufverfahren zur Aufbereitung von Badewasser aus Schwimmbecken mit integrierter Schlammwasseraufbereitung sowie eine entsprechende Anlage.

Aus der DE 198 10 388 A1 ist ein einschlägiges Verfahren bzw. eine Anlage bekannt, wo das aus einem Schwimmbecken kommende Badewasser einer Filterung in einem Festbettfilter unterworfen und anschließend in das Schwimmbecken zurückgeführt wird, wobei Schlammwasser aus dieser Filtration mittels Membranfiltration gereinigt und das Filtrat ebenfalls in den Badewasserkreislauf zurückgeführt wird.

Da die Anforderungen an die Qualität des Badewassers vor allem hinsichtlich Bakterien, Viren etc. immer höher werden, ist es eine Aufgabe der vorliegenden Erfindung, ein Verfahren bzw. eine Vorrichtung zur Verfügung zu stellen, welche eine höhere Qualität des gefilterten Badewassers sicherstellt.

Die Aufgabe wird durch ein Verfahren gemäß Anspruch 1 bzw. durch eine Anlage gemäß Anspruch 11 gelöst. Die Anwendung von Membranfiltration statt einer Festbett-Filterung für die Badewasserfiltration ergibt die gewünschte höhere Qualität des gefilterten Badewassers.

Dadurch, dass die zweite Membranfiltration bei Bedarf, etwa bei großer Verschmutzung des Badewassers, ebenfalls zur Filterung von Badewasser verwendet werden kann, kann im Bedarfsfall eine erhöhte Durchsatzleistung zur Verfügung gestellt werden, ohne dass sich die Qualität des gefilterten Badewassers ändert.

Dadurch, dass das Schlammwasser während der meisten Zeit aus der Rückspülung der Membranfiltration durch eine zweite Membranfiltration aufbereitet wird, verbleibt dieser Teil zumindest großteils im Kreislauf, da das Filtrat aus der Schlammwasserfiltration wieder in den Kreislauf zurückgeführt wird.

In Abhängigkeit der notwendigen Durchsatzleistung wird die Zahl der Membranfilter für die jeweilige Membranfiltration bei der Auslegung der Gesamtanlage gewählt. Die Durchsatzleistung im laufenden Betrieb kann entweder durch Stilllegen bzw. Zuschalten von Membranfiltern, durch Variation der Durchsatzmenge und/oder durch Verwendung bzw. Nichtverwendung der für die Schlammwasserfiltration bestimmten Membranfilter zur Badewasserfiltration angepasst werden. Die Steuerung der Durchsatzleistung erfolgt vorzugsweise in Abhängigkeit von der Verschmutzung des Badewassers und kann z.B. in Abhängigkeit von Messparametem wie z.B. Trübung, gebundenes Chlor, SAK 254, Redoxpotential, etc. erfolgen. Je nach Größe des Schwimmbeckens oder der Einströmvorrichtung können zur Beckendurchströmung größere Umwälzleistungen benötigt werden als zur Aufrechterhaltung der Hygiene notwendig sind. Die benötigte hydraulische Mehrleistung wird entweder aus dem Schwallwasserbehälter oder aus dem Schwimmbecken direkt entnommen, gegebenenfalls behandelt, z.B. durch Feinfilter oder Festbettfilter, und vor der Chlorung, oder eventuell vor der UV-Behandlung, dem Filtrat der Membrananlage beigemischt.

Dadurch, dass das Filtrat aus einer oder mehreren Membranfiltern zum Rückspülen gegebenenfalls unter Zusatz von Chemikalien für einen anderen Membranfilter verwendet wird, kann eine eigene Pumpe für die Rückspülung entfallen, wenn etwa das Filtrat aus mehreren Membranfiltem auf einen Membranfilter geleitet wird. Falls dies nicht möglich ist, muss eine separate Spülpumpe mit geeigneter Spülwasservorlage installiert werden.

Es ist vorteilhaft, wenn ein Teil des Filtrates aus der Filtration des Badewassers zum Rückspülen für die Membranfiltration für das Schlammwasser verwendet wird, da kein Wasser von außerhalb des Kreislaufes zugeführt werden muss.

Die Erfindung kann vorteilhaft nicht nur auf einen Badewasserkreislauf angewendet werden, sondern es können mehrere Badewasserkreisläufe mit jeweils einer eigenen Membranfiltration zur Filtration des Badewassers mit einer gemeinsamen zweiten Membranfiltration für das aus allen Kreisläufen anfallende Schlammwasser verbunden werden. Dies ist beispielsweise einsetzbar, wenn es in einem Schwimmbad mehrere Becken mit unterschiedlicher Wassertemperatur gibt, die deshalb jeweils in einem eigenen Kreislauf aufbereitet werden müssen.

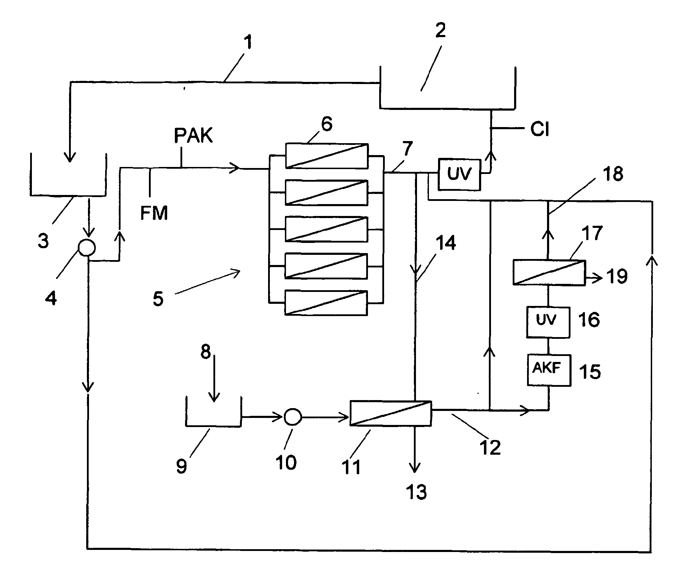

Die Erfindung ist in der Figur beispielhaft und schematisch dargestellt.

Das zu reinigende Badewasser 1 aus dem Schwimmbecken 2 wird in einem Schwallwasserbehälter 3 aufgefangen und mittels einer Pumpe 4 nach Zugabe von Flockungsmitteln FM und ggf. zur Schadstoffreduzierung (z.B. THM, AOX, gebundenes Chlor) von Pulveraktivkohle PAK der Membrananlage 5 zugeführt, welche beispielsweise Ultrafiltrationsmembranen aufweist. Die Membrananlage 5 besteht aus parallel geschalteten Membranfiltern 6, deren Filtrat 7 nach einer Chlorung Cl wieder dem Schwimmbecken 2 zugeführt wird. Es kann zum Abbau von Schadstoffen auch alternativ oder ergänzend zur PAK-Dosierung eine UV-Bestrahlung (Bezugszeichen UV) nach der Membrananlage 5 eingebaut werden.

Das bei der Rückspülung der Membrananlage 5 anfallende Schlammwasser 8 wird in einem Behälter 9 gesammelt und mittels einer Pumpe 10 der Membrananlage 11 zugeführt. Die Membrananlage 11 besteht in diesem Beispiel aus einem Membranfilter mit Ultrafiltrationsmembranen. Die Membrananlage 11 kann jedoch in Abhängigkeit von Wassermenge und Ausbeute auch aus mehreren parallel oder hintereinander geschalteten Membranfiltern bestehen.

Zur Entfernung von störenden Salzen, wie z.B. Bromat, Chlorat, Nitrat, Chlorit, Chlorid, sowie von organischen Verbindungen aus dem Kreislauf kann es erforderlich sein, hinter die Membrananlage 11 eine Umkehrosmose- oder Nanofiltrationsanlage 17 zu setzen.

Vorzugsweise wird dieser ein Aktivkohlefilter (AKF) 15, gegebenenfalls auch eine UV-Anlage (UV) 16 vorgeschaltet. Das Konzentrat 19 aus der Umkehrosmose- oder Nanofiltrationsanlage 17 wird aus dem Kreislauf abgeleitet.

Es besteht also die Möglichkeit, das Filtrat 12 zu 0-100% über die Umkehrosmose- oder Nanofiltrationsanlage 17 zu leiten.

Das Filtrat 12 der Membrananlage 11 bzw. das Permeat 18 der Umkehrosmose- oder Nanofiltrationsanlage 17 wird dem Filtrat 7 der Membrananlage 5 zugegeben. Das bei der Rückspülung anfallende Schlammwasser 13 wird aus dem Kreislauf ausgeschleust.

Für die Rückspülung der Membrananlage 11 wird ein Teilstrom 14 des Filtrats 7 der Membrananlage 5 gegen die Filtrationsrichtung der Membrananlage 11 geleitet.

Die Rückspülung der Membranfilter 6 kann im gezeigten Beispiel so erfolgen, dass das Filtrat von vier Membranfiltern 6 filtratseitig gegen die Filtrationsrichtung der übrigen Membranfilters 6 geleitet wird. Dadurch ist keine eigene Pumpe für die Rückspülung erforderlich.

Als Membranfilter 6 kommen beispielsweise Hohlfasermodule mit 0,8 mm Innendurchmesser, als Membranfilter 11 beispielsweise Hohlfasermodule mit 1,5 mm Innendurchmesser zum Einsatz.

Alternativ sind Wickel-, Platten-, getauchte oder Rohrmodule einsetzbar.

In Zeiten ansteigender Schadstoffgehalte kann zur Verbesserung der Badewasserqualität die Membrananlage 11 zumindest teilweise der Membrananlage 5 zugeschaltet werden. Dadurch ergibt sich eine höhere Aufbereitungsleistung. In diesem Fall wird das Schlammwasser von der Membrananlage 5 bzw. 11 direkt abgeleitet (Bezugszeichen 13) und durch Zusatzwasser ersetzt.

Etwaige zusätzliche im Schwimmbad anfallende belastete Wässer, z.B. Duschabwässer, können in den Schwallwasserbehälter 3 und/oder in den Behälter 9 eingespeist werden.

## Patentansprüche

1. Kreislaufverfahren zur Aufbereitung von Badewasser (1) aus Schwimmbecken (2), wobei das aus einem Schwimmbecken (2) stammende Badewasser in Abhängigkeit von hydraulischen und hygienischen Erfordernissen bis zu 100% der Kreislaufmenge einer Filtration in einer ersten Anlage unterworfen und in das Schwimmbecken (2) zurückgeführt wird, wobei Schlammwasser (8) aus dieser Filtration mittels Membranfiltration (11) in einer zweiten Anlage gereinigt und das Filtrat (12) ebenfalls in den Badewasserkreislauf zurückgeführt wird, **dadurch gekennzeichnet, dass** die Filtration des Badewassers (1) ebenfalls durch Membranfiltration (5, 6) erfolgt und die Membranfiltration (11) für das Schlammwasser (8) zumindest teilweise für die Filtration von Badewasser (1) verwendet wird.

2. Kreislaufverfahren nach Anspruch 1, **dadurch gekennzeichnet, dass** das Ausmaß und die Dauer der Verwendung der für das Schlammwasser (8) vorgesehenen Membranfiltration (11) für die Filtration von Badewasser (1) in Abhängigkeit von der Verschmutzung des Badewassers (1) erfolgt.

3. Kreislaufverfahren nach Anspruch 1 oder 2, **dadurch gekennzeichnet, dass** das Filtrat (12, 14) aus einer Filtration (5, 11) zum Rückspülen für Membranfilter (6, 11) der gleichen und/oder einer anderen Membranfiltration (5, 11) verwendet wird.

4. Kreislaufverfahren nach Anspruch 1, 2 oder 3, **dadurch gekennzeichnet, dass** ein nicht über Membranfiltration aufbereiteter, zur Aufrechterhaltung der hydraulischen Verhältnisse im Becken benötigter Teilstrom über Fein- oder Festbettfilter gereinigt wird.

5. Kreislaufverfahren nach einem der Ansprüche 1 bis 4, **dadurch gekennzeichnet, dass** ein Teil des Filtrates (14) aus der Filtration des Badewassers (1) zum Rückspülen für die Membranfiltration (11) für das Schlammwasser (8) verwendet wird.

6. Kreislaufverfahren nach einem der Ansprüche 1 bis 5, **dadurch gekennzeichnet, dass** zur Adsorption von Schadstoffen vor der Membranfiltration (5) des Badewassers Pulveraktivkohle zudosiert wird.

7. Kreislaufverfahren nach einem der Ansprüche 1 bis 6, **dadurch gekennzeichnet, dass** zum weiteren Abbau von Schadstoffen das Filtrat (7, 12) der Membranfiltrationen (5, 11) einer UV-Bestrahlung unterzogen wird.

8. Kreislaufverfahren nach einem der Ansprüche 1 bis 7, **dadurch gekennzeichnet, dass** zur Adsorption von Schadstoffen vor oder nach den Membranfiltrationen (5, 11) eine Filterung mittels Aktivkohlefilter durchgeführt wird.

9. Kreislaufverfahren nach einem der Ansprüche 1 bis 8, **dadurch gekennzeichnet, dass** das Filtrat (12) der Membranfiltration (11) einer Umkehrosmose oder einer Nanofiltration (17) unterworfen wird.

10. Kreislaufverfahren nach einem der Ansprüche 1 bis 9, **dadurch gekennzeichnet, dass** ein oder mehrere weiterere Badewasserkreisläufe mit jeweils eigener Membranfiltration (5) mit der gleichen Membranfiltration (11) für das Schlammwasser (8) verbunden werden.

11. Anlage zur Aufbereitung von Badewasser (1) aus Schwimmbecken (2) im Kreislaufverfahren, welche eine erste Filteranlage (5), die zur Zuführung von zu filterndem Badewasser mit einem Schwimmbecken (2) verbunden ist, eine zweite Filteranlage (11) in Form eines Membranfilters, die zur Zuführung von zu filterndem Schlammwasser (8) aus der ersten Filteranlage (5) über einen Behälter (9) für Schlammwasser mit der ersten Filteranlage (5) verbunden ist, sowie eine Rückführung von Filtrat (12) aus der zweiten Filteranlage (11) in den Badewasserkreislauf aufweist, **dadurch gekennzeichnet, dass** die erste Filteranlage (5) ebenfalls Membranfilter (6) enthält und die zweite Filteranlage (11) so mit der Zuleitung für Badewasser (1) verbunden ist, dass die zweite Filteranlage (11) der ersten Filteranlage (5) zugeschaltet und zumindest teilweise für die Filtration von Badewasser (1) verwendet werden kann.

12. Anlage nach Anspruch 11, **dadurch gekennzeichnet, dass** die beiden Filteranlagen so ausgebildet und miteinander verbunden sind, dass das Filtrat (12, 14) aus einer Filteranlage (5, 11) zum Rückspülen für Membranfilter (6, 11) der gleichen und/oder einer anderen Filteranlage (5, 11) verwendet werden kann.

13. Anlage nach einem der Ansprüche 11 oder 12, **dadurch gekennzeichnet, dass** die erste und/oder die zweite Filteranlage (5, 11) in Abhängigkeit von Wassermenge und Ausbeute aus mehreren parallel und/oder hintereinander geschalteten Membranfiltern (6) besteht.

14. Anlage nach einem der Ansprüche 11 bis 13, **dadurch gekennzeichnet, dass** zum Rückspülen der Membranfilter (6, 11) eine eigene Spülpumpe vorgesehen ist.

15. Anlage nach einem der Ansprüche 11 bis 14, **dadurch gekennzeichnet, dass** ein Fein- oder Festbettfilter vorgesehen ist, mit welchem ein nicht über Membranfiltration aufbereiteter, zur Aufrechterhaltung der hydraulischen Verhältnisse im Becken benötigter Teilstrom gereinigt werden kann.

16. Anlage nach einem der Ansprüche 11 bis 15, **dadurch gekennzeichnet, dass** der zweiten Filteranlage (11) eine Umkehrosmose- oder Nanofiltrationsanlage (17) nachgeschaltet ist.

## Claims

1. A circulation method for treating bathing water (1) from swimming pools (2), wherein in dependence on hydraulic and hygiene requirements up to 100% of the circulation amount of the bathing water originating from a swimming pool (2) is subjected to a filtration operation in a first installation and returned to the swimming pool (2), wherein sludge water (8) from that filtration operation is purified by means of membrane filtration (11) in a second installation and the filtrate (12) is also returned to the bathing water circulation, **characterised in that** filtration of the bathing water (1) is also effected by membrane filtration (5, 6) and the membrane filtration (11) for the sludge water (8) is at least partially used for the filtration of bathing water (1).

2. A circulation method according to claim 1 **characterised in that** the extent and the duration of the membrane filtration (11) provided for the sludge water (8) for the filtration of bathing water (1) is effected in dependence on the degree of contamination of the bathing water (1).

3. A circulation method according to claim 1 or claim 2 **characterised in that** the filtrate (12, 14) from a filtration operation (5, 11) is used for back-flushing for membrane filters (6, 11) of the same and/or a different membrane filtration operation (5,11).

4. A circulation method according to claim 1, claim 2 or claim 3 **characterised in that** a partial flow which is not treated by way of membrane filtration and which is required to maintain the hydraulic conditions in the pool is purified by way of fine or solid bed filters.

5. A circulation method according to one of claims 1 to 4 **characterised in that** a part of the filtrate (14) from the filtration of the bathing water (1) is used for back-flushing for the membrane filtration operation (11) for the sludge water (8).

6. A circulation method according to one of claims 1 to 5 **characterised in that** powdered activated carbon is added for the adsorption of pollutants upstream of the bathing water membrane filtration operation (5).

7. A circulation method according to one of claims 1 to 6 **characterised in that** the filtrate (7, 12) of the membrane filtration operations (5, 11) is subjected to UV radiation for the further breakdown of pollutants.

8. A circulation method according to one of claims 1 to 7 **characterised in that** filtering by means of activated carbon filters is effected upstream or downstream of the membrane filtration operations (5, 11) for the adsorption of pollutants.

9. A circulation method according to one of claims 1 to 8 **characterised in that** the filtrate (12) of the membrane filtration operation (11) is subjected to reverse osmosis or nanofiltration (17).

10. A circulation method according to one of claims 1 to 9 **characterised in that** one or more further bathing water circuits with their own specific membrane filtration operation (5) are connected to the same membrane filtration operation (11) for the sludge water (8).

11. An installation for treating bathing water (1) from swimming pools (2) in the circulation method which has a first filter installation (5) which is connected to a swimming pool (2) for the feed of bathing water to be filtered, a second filter installation (11) in the form of a membrane filter which for the feed of sludge water (8) to be filtered from the first filter installation (5) is connected by way of a container (9) for sludge water to the first filter installation (5), and a filtrate return (12) from the second filter installation (11) into the bathing water circuit, **characterised in that** the first filter installation (5) also includes membrane filters (6) and the second filter installation (11) is so connected to the feed line for bathing water (1) that the second filter installation (11) can be linked to the first filter installation (5) and can be at least partially used for the filtration of bathing water (1).

12. An installation according to claim 11 **characterised in that** the two filter installations are so designed and connected together that the filtrate (12, 14) from a filter installation (5, 11) can be used for back-flushing for membrane filters (6, 11) of the same and/or another filter installation (5, 11).

13. An installation according to one of claims 11 and 12 **characterised in that** the first and/or the second filter installation (5, 11) comprises a plurality of membrane filters (6) connected in parallel and/or in succession in dependence on the amount of water and the output.

14. An installation according to one of claims 11 to 13 **characterised in that** a dedicated flushing pump is provided for back-flushing of the membrane filters (6, 11).

15. An installation according to one of claims 11 to 14 **characterised in that** there is provided a fine or solid bed filter with which a partial flow which is not treated by way of membrane filtration and which is required to maintain the hydraulic conditions in the pool can be purified.

16. An installation according to one of claims 11 to 15 **characterised in that** a reverse osmosis or nanofiltration installation (17) is connected downstream of the second filter installation (11).

## Revendications

1. Procédé de recyclage pour traiter de l'eau de baignade (1) de piscines (2), dans lequel l'eau de baignade provenant d'une piscine (2) est soumise à une filtration dans une première installation en fonction de nécessités hydrauliques et hygiéniques jusqu'à 100 % de la quantité de circulation et est ramenée dans la piscine (2), des eaux schlammeuses (8) de cette filtration sont purifiées au moyen d'une filtration à membrane (11) dans une deuxième installation, et le filtrat (12) est également ramené dans le cycle d'eau de baignade, **caractérisé en ce que** la filtration de l'eau de baignade (1) a lieu également par filtration à membrane (5, 6) et la filtration à membrane (11) pour les eaux schlammeuses (8) est utilisée au moins partiellement pour la filtration de l'eau de baignade (1).

2. Procédé de recyclage selon la revendication 1, **caractérisé en ce que** l'étendue et la durée de l'utilisation de la filtration à membrane (11) prévue pour les eaux schlammeuses (8) a lieu pour la filtration d'eau de baignade (1) en fonction de la pollution de l'eau de baignade (1).

3. Procédé de recyclage selon la revendication 1 ou 2, **caractérisé en ce que** le filtrat (12, 14) provenant d'une filtration (5, 11) est utilisé pour le rétrolavage pour des filtres à membrane (6, 11) de la même ou d'une autre filtration à membrane (5, 11).

4. Procédé de recyclage selon la revendication 1, 2 ou 3, **caractérisé en ce qu'**un courant partiel non traité par filtration à membrane et nécessaire pour maintenir les rapports hydrauliques dans le bassin est purifié par l'intermédiaire de filtres fins ou de filtres à lit fixe.

5. Procédé de recyclage selon l'une des revendications 1 à 4, **caractérisé en ce qu'**une partie du filtrat (14) provenant de la filtration de l'eau de baignade (1) est utilisée pour le rétrolavage pour la filtration à membrane (11) pour les eaux schlammeuses (8).

6. Procédé de recyclage selon l'une des revendications 1 à 5, **caractérisé en ce que** pour l'adsorption de substances polluantes, du charbon actif en poudre est ajouté avant la filtration à membrane (5) de l'eau de baignade.

7. Procédé de recyclage selon l'une des revendications 1 à 6, **caractérisé en ce que** pour la poursuite de la dégradation de substances polluantes, le filtrat (7, 12) des filtrations à membrane (5, 11) est soumis à une irradiation UV.

8. Procédé de recyclage selon l'une des revendications 1 à 7, **caractérisé en ce que** pour l'adsorption de substances polluantes avant ou après les filtrations à membrane (5, 11), un filtrage est effectué au moyen de filtres à charbon actif.

9. Procédé de recyclage selon l'une des revendications 1 à 8, **caractérisé en ce que** le filtrat (12) de la filtration à membrane (11) est soumis à une osmose inverse ou à une nanofiltration (17).

10. Procédé de recyclage selon l'une des revendications 1 à 9, **caractérisé en ce qu'**un ou plusieurs autres recyclages d'eau de baignade avec filtration à membrane (5) propre respective sont reliés à la même filtration à membrane (11) pour les eaux schlammeuses (8).

11. Installation de traitement d'eau de baignade (1) provenant de piscines (2) en procédé à recyclage, qui comprend une première installation de filtrage (5) qui est reliée à une piscine (2) pour l'amenée d'eau de baignade à filtrer, une deuxième installation de filtrage (11) sous forme d'un filtre à membrane, qui est reliée à la première installation de filtrage (5) pour l'amenée d'eaux schlammeuses (8) à filtrer provenant de la première installation de filtrage (5) via un récipient (9) pour eaux schlammeuses, ainsi qu'une ramenée de filtrat (12) depuis la deuxième installation de filtrage (11) jusque dans le cycle d'eau de baignade, **caractérisée en ce que** la première installation de filtrage (5) contient également des filtres à membrane (6) et la deuxième installation de filtrage (11) est reliée à la conduite pour l'eau de baignade (1) de telle sorte que la deuxième installation de filtrage (11) est raccordée à la première installation de filtrage (5) et peut être utilisée au moins partiellement pour la filtration d'eau de baignade (1).

12. Installation selon la revendication 11, **caractérisée en ce que** les deux installations de filtrage sont réalisées et reliées l'une à l'autre de telle sorte que le filtrat (12, 14) provenant d'une installation de filtrage (5, 11) peut être utilisé pour le rétrolavage pour des filtres à membrane (6, 11) de la même et/ou d'une autre installation de filtrage (5, 11).

13. Installation selon l'une des revendications 11 ou 12, **caractérisée en ce que** la première et/ou la deuxième installation de filtrage (5, 11) est constituée, en fonction de la quantité d'eau et du débit, par plusieurs filtres à membrane montés en parallèle et/ou les uns derrière les autres.

14. Installation selon l'une des revendications 11 à 13, **caractérisée en ce que** pour le rétrolavage des filtres à membrane (6, 11) il est prévu une propre pompe de rinçage.

15. Installation selon l'une des revendications 11 à 14, **caractérisé en ce qu'**il est prévu un filtre fin ou un filtre à lit fixe avec lequel un courant partiel non traité par filtration à membrane et nécessaire pour maintenir les rapports hydrauliques dans le bassin peut être purifié.

16. Installation selon l'une des revendications 11 à 15, **caractérisé en ce qu'**en aval de la deuxième installation de filtrage (11) est montée une installation à osmose inverse ou de nanofiltration (17).
